(19) Europäisches Patentamt

European Patent Office

Office européen des brevets

(11) EP 0 717 051 A1

(12) **DEMANDE DE BREVET EUROPEEN**

(43) Date de publication:
19.06.1996 Bulletin 1996/25

(51) Int Cl.⁶: **C08F 6/04**, C09C 3/04

(21) Numéro de dépôt: 95420352.7

(22) Date de dépôt: 06.12.1995

(84) Etats contractants désignés:
**BE DE DK ES FR GB IT PT SE**

(30) Priorité: **16.12.1994 FR 9415440**

(71) Demandeur: **COATEX S.A.**
**F-69730 Genay (FR)**

(72) Inventeurs:
• **Egraz, Jean-Bernard**
  **F-69130 Ecully (FR)**
• **Ravet, Georges**
  **F-69290 Saint-Genis-Les-Ollieres (FR)**
• **Buri, Matthias**
  **CH-4852 Rothrist (CH)**
• **Blum, René**
  **CH-4915 St. Urban (CH)**

(54) **Procédé d'obtention d'agents de broyage et/ou de dispersion par séparation physico-chimique, agents obtenus et leurs utilisations**

(57) Procédé d'obtention d'agent de broyage et/ou de dispersion par usage d'un dispositif de séparation composé d'une ou plusieurs membranes organiques et/ou minérales.

Agent de broyage et/ou de dispersion obtenu par le dit procédé et son utilisation à la fabrication de suspensions aqueuses de particules minérales.

Les dites suspensions aqueuses et leurs applications dans les domaines pigmentaires.

EP 0 717 051 A1

**Description**

La présente invention concerne un procédé d'obtention d'agent de broyage et/ou de dispersion par séparation physico-chimique de polymères et/ou copolymères vinyliques, acryliques et/ou polycondensats au moyen de techniques d'extraction, de filtration, d'ultrafiltration, de nanofiltration et/ou d'osmose inverse.

La présente invention concerne également l'agent de broyage et/ou de dispersion résultant dudit procédé de fractionnement et son usage à la fabrication de suspensions aqueuses de particules minérales destinées à des applications pigmentaires.

Elle concerne aussi les suspensions aqueuses de particules minérales contenant le dit agent. Elle concerne enfin l'application de ces dites suspensions aux domaines pigmentaires tels que par exemple le papier, la peinture, le plastique, le forage, les travaux publics, la céramique ou autres.

Le fractionnement de polymères en solution est déjà connu par l'homme de l'art. Le document (M.R.J. Cantow = Polymer Fractionation, Academic Press N.Y. 1967) révèle un procédé de séparation selon le poids moléculaire et/ou la composition chimique à l'aide d'un équilibre de phase mais ce procédé ne permet pas l'obtention d'un agent spécifique au broyage et/ou à la dispersion de charges pulvérulentes et n'utilise pas de membranes.

D'autres documents commme le FR 2 488 814, le EP 0 127 388 ou le EP 0 542 643 ou bien encore le EP 0 499 267 proposent des procédés de séparation de différents poids moléculaires d'un polymère et/ou copolymère acrylique hydrosoluble en vue d'obtenir un agent de broyage et/ou de dispersion de particules minérales pulvérulentes en suspension aqueuse destinée à des applications pigmentaires.

Mais de tels procédés basés sur la différence de solubilité des différents poids moléculaires dans la solution additivée du solvant polaire tel que l'alcool isopropylique sont d'emploi dangereux et de plus en plus réglementé par les nouvelles législations.

De plus ces procédés ne permettent pas la séparation de polymères et/ou copolymères acryliques à l'état totalement acide.

Or cette séparation de polymères et/ou copolymères acryliques à l'état totalement acide permet de neutraliser par n'importe quel type d'agent neutralisant la ou les fractions utilisées dans l'application concernée.

Considérant que ces nombreuses tentatives effectuées autour des propriétés de différence de solubilité donnaient certes de bons résultats mais devaient être améliorées et s'apercevant que les dites techniques ne pouvaient pas permettre d'améliorations, la Demanderesse s'en est écarté radicalement et a mis au point un procédé de séparation en continu et/ou en discontinu permettant de ne pas utiliser de solvant organique ou permettant aussi bien le choix du solvant mélangeable ou non, que des autres paramètres tels que la neutralisation des groupes acides du ou des polymères et/ou copolymères ou bien encore la concentration du milieu, ou bien encore la température et éventuellement la polarité ou la nature même du solvant purement organique et permettant d'aboutir, de manière surprenante, à un agent de broyage et/ou de dispersion hydrosoluble permettant d'obtenir des suspensions aqueuses de particules minérales destinées à des applications pigmentaires.

Un autre but de l'invention est l'obtention par ledit procédé d'un agent de broyage et/ou de dispersion permettant d'obtenir des suspensions aqueuses de particules minérales destinées à des applications pigmentaires.

Enfin un autre but de cette invention concerne les suspensions aqueuses de particules minérales obtenues par ledit agent ainsi que leurs applications dans les domaines du papier, de la peinture, des plastiques, de la céramique, du traitement de l'eau, des boues de forage ou bien encore de la matification des textiles synthétiques ou toute autre application nécessitant l'usage de suspensions aqueuses de particules minérales.

Ces buts sont atteints grâce au procédé de séparation en fractions des polymères et/ou copolymères vinyliques, acryliques et/ou polycondensats hydrosolubles, selon l'invention au moyen de techniques d'extraction, de filtration, d'ultrafiltration, de nanofiltration et/ou d'osmose inverse en milieu aqueux ou hydro-alcoolique ou bien encore solvant.

Alors que l'art antérieur propose des procédés de séparation des diverses fractions basés sur la différence du coefficient de partage de ces fractions résultant en différence de solubilité, le procédé selon l'invention s'en distingue en ce qu'il est basé sur la différence de volume hydrodynamique et éventuellement sur l'interaction membrane-produit à séparer.

Par "volume hydrodynamique" la Demanderesse entend le volume occupé par les molécules de polymère en fonction des différentes constantes physico-chimiques du milieu qui affectent le passage des chaînes polymériques à travers la membrane ainsi qu'en fonction d'un éventuel traitement chimique de la membrane qui pour un homme du métier semble naturellement influencer les conditions de séparation.

Ce procédé selon l'invention permet ainsi une séparation continue et/ou discontinue en diverses phases dans un état totalement acide ou partiellement neutralisé ou totalement neutralisé et sans l'obligation d'un apport d'un tiers solvant polaire ou non.

Ainsi le procédé d'obtention, selon l'invention d'un agent de broyage et/ou de dispersion par séparation physico-chimique de polymères et/ou copolymères vinyliques, acryliques et/ou polycondensats, hydrosolubles se caractérise en ce qu'il est fait usage d'un dispositif de séparation composé d'une ou plusieurs membranes organiques et/ou minérales surmontant éventuellement un support, pour séparer le polymère et/ou copolymère et/ou polycondensat hydrosoluble, en diverses phases utiles dont au moins l'une correspond à un agent de broyage et/ou de dispersion permettant d'obtenir des suspensions aqueuses de particules minérales destinées à des applications pigmentaires.

Il est à noter ici que par phase utile la Demanderesse entend que la ou les phases non utilisées comme agent de broyage et/ou de dispersion peuvent éventuellement avoir des applications aussi bien dans d'autres secteurs techniques que dans des domaines techniques voisins.

Ce dispositif, constitué de la ou les membranes de forme géométrique variable telle que par exemple conique ou cylindrique et éventuellement du support de forme géométrique identique ou différente à la membrane, comprend des pores symétriques ou asymétriques. De plus ces membranes, éventuellement traitées au moyen d'un agent organique et/ou minéral, sont par exemple du type capillaire, tuyau, spirale à diamètre et/ou distance variables ou plateaux à distance également variable. Elles sont placées en parallèle ou en série et peuvent être soumises, continuellement ou par intermittence à des ondes ultrasoniques en vue de leur décolmatage.

L'agent de broyage et/ou de dispersion, selon l'invention, obtenu par le procédé de fractionnement selon l'invention est purifié et se caractérise par une courbe de distribution de poids moléculaire obtenue par analyse GPC aqueuse et détection réfractométrique présentant une atténuation, par rapport au produit de départ, d'au moins 3 % et préférentiellement d'au moins environ 10 % du deuxième pic d'inflexion correspondant à un épaulement.

De plus, l'agent de broyage et/ou de dispersion, selon l'invention, obtenu par le procédé de séparation selon l'invention se caractérise en ce que les groupes générateurs de fonction acide contenu dans le dit agent sont partiellement ou totalement neutralisés par un ou plusieurs agents de neutralisation monovalents et/ou polyvalents tels que notamment l'hydroxyde de sodium, de potassium, d'ammonium, de lithium, de zinc, de calcium ou de magnésium, d'aluminium ou bien encore telle qu'une amine primaire, secondaire ou tertiaire aliphatique et/ou cyclique.

Les suspensions aqueuses de particules minérales se caractérisent en ce qu'elles contiennent 0,05 % à 2 % d'un ou plusieurs agents de broyage et/ou de dispersion selon l'invention.

La fraction du polymère et/ou copolymère vinylique, acrylique et/ou polycondensat hydrosoluble destinée à être utilisée comme agent de broyage et/ou de dispersion en vue de l'obtention de suspensions pigmentaires est généralement extraite de la solution polymérique obtenue selon des procédés connus de la polycondensation ou de la polymérisation radicalaire, en présence de régulateurs de polymérisation tels que par exemple des composés organiques à base de réducteurs tels que notamment l'hydroxylamine et en présence d'initiateurs de polymérisation tels que les péroxydes et les persels, par exemple l'eau oxygénée, le persulfate, l'hypophosphite de sodium, l'acide hypophosphoreux, de l'un au moins des monomères et/ou comonomères suivants : acide acrylique et/ou méthacrylique, itaconique, crotonique, fumarique, anhydride maléïque, ou encore isocrotonique, aconitique, mésaconique, sinapique, undécylénique, angélique, canellique, hydroxyacrylique, sous forme acide ou partiellement ou totalement neutralisés, ou bien encore de comonomères cationiques tels que par exemple l'acrylate de diméthyle aminoéthyle, le méthacrylate de diméthyle aminoéthyle, le chlorure de diméthyle diallylammonium, le méthacrylamido 1-propyl 3-triméthylammonium chlorure, leurs dérivés ou leurs mélanges ou bien encore des comonomères sulfonés du type acrylamido méthyl propane sulfonique, méthallylsulfonate, ou encore des comonomères comme l'acroléine, l'acrylamide, l'acrylonitrile, les esters des acide acrylique et méthacrylique, la vinylpyrrolidone, la vinylcaprolactame, l'éthylène, le propylène ,l'isobutylène, le diisobutylène, l'acétate de vinyle, le styrène, l'alphaméthylstyrène, la méthylvinylcétone, dans un milieu de polymérisation qui peut être l'eau, le méthanol, l'éthanol, le propanol, l'isopropanol, les butanols ou leurs mélanges, ou encore le diméthylformamide, le diméthylsulfoxyde, le tétrahydrofurane, l'acétone, la méthyléthylcétone, l'acétate d'éthyle, l'acétate de butyle, l'hexane, l'heptane, le benzène, le toluène, le xylène, le mercaptoéthanol, le tertiododécylmercaptan, les acides acétique, tartrique, lactique, citrique, gluconique, glucoheptonique, l'acide 2-mercaptopropionique, le thiodiéthanol, les solvants halogénés comme le tétrachlorure de carbone, le chloroforme, le chlorure de méthylène, les éthers de monopropylène glycol, diéthylèneglycol ou leurs mélanges.

La solution de polymérisat destinée à être séparée, et dont les groupes générateurs de fonction acide sont acides ou partiellement neutralisés, est éventuellement neutralisée partiellement ou totalement par un ou plusieurs agents de neutralisation monovalents et/ou polyvalents tels que notamment l'hydroxyde de sodium, de potassium, d'ammonium, de lithium, de zinc, de calcium ou de magnésium, d'aluminium, ou bien encore telle qu'une amine primaire, secondaire ou tertiaire aliphatique et/ou cyclique, etc... puis soumise éventuellement à distillation pour éliminer le ou les solvants autres que l'eau et constituant le milieu de polymérisation.

La solution aqueuse ou non de polymérisat éventuellement distillée est alors introduite dans une cuve munie ou non d'un système d'homogénéisation, soit à la concentration en matière sèche initiale de l'ordre de 20 % à 50 % soit sous forme diluée de 1,5 % à 20 % en matière sèche par de l'eau, avant d'être pompée vers un système de séparation telle que l'ultrafiltration, la nanofiltration et/ou l'osmose inverse, avec ou sans contre pression en un ou plusieurs passages ou recirculation jusqu'à des températures élevées de l'ordre de 70°C et pouvant atteindre 150°C.

La membrane utilisée peut notamment être plate, en spirale, capillaire ou bien tubulaire, à un seul module et/ou une combinaison de plusieurs modules distincts ou non montés en parallèle et/ou en série.

Elle est généralement constituée d'un support différent ou identique, éventuellement traité en surface par différents additifs tels que par exemple le polyphosphazène, le polyvinylimidazole quaternisé, le polyéthylène quaternisé, le Naflon, le Solgel ou autres.

Ces membranes sont dans tous les cas choisies de telle sorte que la solution du polymérisat totalement neutralisée ou partiellement neutralisée ou bien encore acide soit séparée en plusieurs fractions utiles dont au moins l'une des fractions est l'agent de broyage et/ou de dispersion, selon l'invention, de particules minérales pulvérulentes en suspensions aqueuses destinées à des applications pigmentaires.

Le dispositif permettant la mise en oeuvre du procédé selon l'invention permet également la reprise d'une des fractions par exemple le rétentat ainsi que sa recirculation vers la cuve de départ où il se mélange au polymérisat en vue d'un ou plusieurs passages supplémentaires à travers le dispositif de séparation.

Il est à noter ici qu'il peut être intéressant d'utiliser plusieurs membranes de même type ou de type différent. Il est également intéressant de noter que toutes les phases sont récupérables et utilisables.

Le rétentat correspondant à l'agent selon l'invention est purifié et se caractérise par une courbé de distribution de poids moléculaire obtenue par analyse GPC aqueuse et détection réfractométrique présentant une atténuation par rapport au produit de départ d'au moins 3 % et préférentiellement d'au moins environ 10 % du deuxième pic d'inflexion correspondant à un épaulement.

La phase contenant la fraction des polymères et/ou copolymères correspondant à l'agent selon l'invention peut être utilisée sous cette forme liquide en solution comme agent de broyage des substances minérales à traiter ; mais elle peut également être traitée par tous moyens connus pour isoler le polymère et/ou copolymère vinylique, acrylique et/ou polycondensat sous forme d'une fine poudre qui peut être mise en oeuvre comme agent de broyage.

En pratique, l'opération de broyage de la substance minérale à affiner consiste à broyer la substance minérale avec un corps broyant en particules très fines dans un milieu aqueux contenant l'agent de broyage. On forme une suspension aqueuse de la substance à broyer.

A la suspension de la substance minérale à broyer, on ajoute le corps broyant de granulométrie avantageusement comprise entre 0,20 millimètres et 4 millimètres. Le corps broyant se présente généralement sous la forme de particules de matériaux aussi divers que l'oxyde de silicium, l'oxyde d'aluminium, l'oxyde de zirconium ou leurs mélanges ainsi que les résines synthétiques de haute dureté, les aciers, ou autres. Un exemple de composition de tels corps broyants est donnée par le brevet FR 2 203 681 qui décrit des éléments broyants formés de 30 à 70 % en poids d'oxyde de zirconium, 0,1% à 5% d'oxyde d'aluminium et de 5 % à 20 % d'oxyde de silicium. Le corps broyant est de préférence ajouté à la suspension en une quantité telle que le rapport en poids entre ce matériaux de broyage et la substance minérale à broyer soit d'au moins 2/1, ce rapport étant de préférence compris entre les limites 3/1 et 5/1.

Le mélange de la suspension et du corps broyant est alors soumis à l'action mécanique de brassage, telle que celle qui se produit dans un broyeur classique à microéléments.

L'agent de broyage et/ou de dispersion selon l'invention est également introduit au sein du mélange formé par la suspension aqueuse de substances minérales et par le corps broyant à raison de 0,05 à 2 % en poids de la fraction séchée desdits polymères par rapport à la masse sèche de la substance minérale à affiner.

Le temps nécessaire pour aboutir à une excellente finesse de la substance minérale après broyage varie selon la nature et la quantité des substances minérales à broyer, et selon le mode d'agitation utilisé et la température du milieu pendant l'opération de broyage.

Les substances minérales à affiner peuvent être d'origines très diverses telles que le carbonate de calcium naturel ou synthétique et les dolomies, le sulfate de calcium, le dioxyde de titane, l'hydroxyde d'aluminium, les silicates et alumino-silicates tels que par exemple le kaolin, le mica, le talc, la bentonite c'est-à-dire toutes les substances minérales qui doivent être broyées pour être utilisables dans des applications aussi diversifiées que l'enduction des papiers, la pigmentation des peintures et enduits, la charge des caoutchoucs ou résines synthétiques, la matification des textiles synthétiques, le traitement de l'eau, les boues de forage aqueuses ou autres.

Ainsi, l'application de l'agent de broyage et/ou de dispersion selon l'invention autorise la transformation par broyage en suspension aqueuse de haute concentration en matière sèche de substances minérales grossières en des particules fines.

La portée et l'intérêt de l'invention seront mieux perçus grâce aux exemples suivants qui ne sauraient être limitatifs.

<u>EXEMPLE 1:</u>

Cet exemple concerne l'obtention d'un agent de broyage et/ou de dispersion selon l'invention par la séparation, à l'aide d'une membrane capillaire, à une température de l'ordre de 25°C et à différentes concentrations en matière sèche, d'un polyacrylate de sodium totalement neutralisé par de la soude et son utilisation comme agent de broyage et/ou de dispersion.

Essai n°1 :

Dans ce but une solution aqueuse à 32 % de concentration en polyacrylate totalement neutralisé par de la soude de poids moléculaire moyen en poids $\overline{Mw}$ = 6000 déterminé par GPC aqueuse dont les standards appartiennent à une série de polyacrylates de sodium commercialisée par la société Polymer Standards Service sous les noms de PSS-PAA variant de 18 K à 2 K, a été introduite telle qu'elle au moyen d'une pompe de circulation à un débit de 144 l/h, à travers la membrane capillaire de type UFP-5-E-6A contenant 170 capillaires et commercialisée par la société SEMPAS.

Après 6 heures de fonctionnement du dispositif à un débit d'alimentation de 144 l/h à une température variant entre 24,3°C et 25,1°C et une pression évoluant à l'entrée de 4,8.10$^5$ Pa à 5,4. 10$^5$ Pa et à la sortie de 0,2.10$^5$ Pa à 1,10$^5$ Pa, le rétentat recueilli correspondant à l'agent de broyage et/ou de dispersion, selon l'invention, est un polyacrylate de sodium totalement neutralisé ayant une teneur en matière sèche de 31,5 %, un poids moléculaire moyen en poids $\overline{Mw}$ = 6250 déterminé par GPC aqueuse et se caractérise par une courbe de distribution de poids moléculaire obtenue par analyse GPC aqueuse et détection réfractométrique présentant une atténuation du deuxième pic d'inflexion de 3,8 %, par rapport au produit de départ, alors que le perméat est un polyacrylate de sodium totalement neutralisé ayant une teneur en matière sèche de 29,2 % et un poids moléculaire moyen en poids $\overline{Mw}$ = 3200 déterminé par GPC aqueuse.

Essai n°2 :

Cet essai est effectué avec le même matériel et le même polyacrylate d'alimentation que l'essai n°1 mais dilué à 10 % avec de l'eau purifiée par osmose inverse.

Pour les mesures de GPC, on utilise les mêmes standards que ceux de l'exemple 1.

Après 2 heures de fonctionnement du dispositif à un débit d'alimentation de 950 l/h avec une température s'élevant progressivement de 18,5°C à 27,7°C et une pression évoluant à l'entrée de 2,7.10$^5$ Pa à 2,9.10$^5$ Pa et à la sortie de 1,0.10$^5$ Pa à 1,1.10$^5$ Pa, le rétentat recueilli correspondant à l'agent de broyage et/ou de dispersion selon l'invention est un polyacrylate de sodium totalement neutralisé ayant une teneur en matière sèche de 10,2 %, un poids moléculaire moyen en poids $\overline{Mw}$ = 6400 déterminé par GPC aqueuse et se caractérise par une courbe de distribution de poids moléculaire obtenue par analyse GPC aqueuse et détection réfractométrique présentant une atténuation de 17,4 %, par rapport au produit de départ, du deuxième pic d'inflexion correspondant à un épaulement alors que le perméat est un polyacrylate de sodium totalement neutralisé ayant une teneur en matière sèche de 7,5 % et un poids moléculaire moyen en poids $\overline{Mw}$ = 3000 déterminé par GPC aqueuse.

Essai n°3 :

Cet essai est effectué avec le même matériel et le même polyacrylate d'alimentation que l'essai n°1 mais dilué à 5 % avec de l'eau purifiée par osmose inverse.

Pour les mesures de GPC, on utilise les mêmes standards que ceux de l'exemple 1.

Après 5 heures de fonctionnement du dispositif à un débit d'alimentation de 950 l/h avec une température s'élevant progressivement de 17,7°C à 27,7°C et une pression évoluant de 2,7.10$^5$ Pa à 2,0.10$^5$ Pa à l'entrée et de 1,1.10$^5$ Pa à 0,9.10$^5$ Pa à la sortie, le rétentat recueilli correspondant à l'agent de broyage et/ou de dispersion selon l'invention, est un polyacrylate de sodium totalement neutralisé ayant une teneur en matière sèche de 6,1 %, un poids moléculaire moyen en poids $\overline{Mw}$ = 6500 déterminé par GPC aqueuse et se caractérise par une courbe de distribution de poids moléculaire obtenue par analyse GPC aqueuse et détection réfractométrique présentant une atténuation de 13 %, par rapport au produit de départ, du deuxième pic d'inflexion correspondant à un épaulement alors que le perméat est un polyacrylate de sodium totalement neutralisé ayant une teneur en matière sèche de 3,0 % et un poids moléculaire moyen en poids $\overline{Mw}$ = 2000 déterminé par GPC aqueuse.

Essais n°4 à 7 :

Ces essais concernent la préparation d'une suspension de carbonate de calcium grossier soumise à un broyage pour l'affiner en une suspension microparticulaire.

Dans ce but, une suspension de carbonate de calcium grossier a été préparée à partir d'un carbonate de calcium naturel, en mettant en oeuvre :

- pour l'essai n°4 illustrant l'art antérieur, un polyacrylate de sodium totalement neutralisé de $\overline{Mw}$ = 6000 déterminé par GPC aqueuse de concentration en matière sèche égale à 32 % et résultant de la polymérisation radicalaire de l'acide acrylique et correspondant au produit d'alimentation du dispositif de séparation

- pour l'essai n°5 illustrant l'invention le polyacrylate de sodium totalement neutralisé de l'essai n°1 et de $\overline{Mw} = 6250$
- pour l'essai n°6 illustrant l'invention le polyacrylate de sodium totalement neutralisé de l'essai n°2 et de $\overline{Mw} = 6400$
- pour l'essai n°7 illustrant l'invention le polyacrylate de sodium totalement neutralisé de l'essai n°3 et de $\overline{Mw} = 6500$.

Pour chaque essai, on a préparé une suspension aqueuse de carbonate de calcium provenant du gisement d'Orgon (France) ayant une granulométrie inférieure à 10 microns.

La suspension aqueuse a une concentration en matière sèche de 76 % en poids par rapport à la masse totale.

L'agent de broyage est introduit dans cette suspension selon les quantités indiquées dans le tableau ci-après, exprimées en pour cent en poids sec par rapport à la masse de carbonate de calcium sec à broyer.

La suspension circule dans un broyeur du type Dyno-Mill à cylindre fixe et impulseur tournant dont le corps broyant est constitué par des billes de corindon de diamètre compris dans l'intervalle 0,6 millimètres à 1,0 millimètre.

Le volume total occupé par le corps broyant est de 1150 centimètres cubes tandis que sa masse est de 2900 g.

La chambre de broyage a un volume de 1400 centimètres cubes.

La vitesse circonférentielle du broyeur est de 10 mètres par seconde.

La suspension de carbonate de calcium est recyclée à raison de 18 litres par heure.

La sortie du broyeur Dyno-Mill est munie d'un séparateur de mailles 200 microns permettant de séparer la suspension résultant du broyage et le corps broyant.

La température lors de chaque essai de broyage est maintenue à 60°C environ.

A la fin du broyage (To), on récupère dans un flacon un échantillon de la suspension pigmentaire dont 80 % des particules ont une dimension inférieure à un micron, et on en mesure la viscosité à l'aide d'un viscosimètre Brookfield type RVT, à une température de 20°C et des vitesses de rotation de 10 tours par minute et 100 tours par minute avec le mobile adéquat.

Après un temps de repos de 8 jours dans le flacon, la viscosité de la suspension est mesurée par introduction dans le flacon non agité du mobile adéquat du viscosimètre Brookfield type RVT, à une température de 20°C et des vitesses de rotation de 10 tours par minute et 100 tours par minute (viscosité AVAG = avant agitation).

Les mêmes mesures de viscosité sont également effectuées une fois le flacon agité et constituent les résultats de viscosité APAG (après agitation).

Tous ces résultats expérimentaux sont consignés dans le tableau 1 suivant :

– TABLEAU 1 –

| | Essai No. | AGENT DE BROYAGE UTILISE | | | | | Viscosité Brookfield de la suspension (à 20°C en m.Pa.s) à 76 % de matière sèche | | | | | |
| --- | --- | --- | --- | --- | --- | --- | --- | --- | --- | --- | --- | --- |
| | | Neutralisation Taux/Ion (en %) | Mw | Atténuation courbe GPC (%) | Extrait sec % | Consommation en agent en % sec/sec | To 10 T/min | To 100 T/min | AVAG 10 T/min 8 jours | AVAG 100 T/min 8 jours | APAG 100 T/min 8 jours | APAG 100 T/min 8 jours |
| Art antérieur | 4 | 100 Na | 6000 | 0 | 32 | 0,95 | 2000 | 640 | 33800 | 4500 | 15700 | 3230 |
| Invention | 5 | 100 Na | 6250 | 3,8 | 31,5 | 0,82 | 650 | 230 | 6150 | 500 | 1250 | 250 |
| Invention | 6 | 100 Na | 6400 | 17,4 | 10,2 | 0,94 | 2000 | 770 | 23400 | 4100 | 7650 | 1930 |
| Invention | 7 | 100 Na | 6500 | 13,0 | 6,1 | 0,92 | 1530 | 520 | 25480 | 3800 | 6560 | 1600 |

AVAG : Mesure de la viscosité avant agitation de la suspension

APAG : Mesure de la viscosité après agitation de la suspension

La lecture du tableau 1 permet de constater que quelle que soit la concentration en matière sèche du polymère à fractionner, la séparation à l'aide d'une membrane capillaire permet d'obtenir un agent de broyage et/ou de dispersion, selon l'invention dont la courbe de distribution de poids moléculaire obtenue par analyse GPC aqueuse et détection réfractométrique présente une atténuation du deuxième pic d'inflexion, correspondant à un épaulement, d'au moins 3,8 % par rapport au produit de départ.

Cette lecture permet également de constater que l'agent de broyage et/ou de dispersion selon l'invention permet d'aboutir à des suspensions aqueuses de carbonate de calcium hautement concentrées et de viscosité Brookfield, à une vitesse de rotation du mobile adéquat, de l'ordre de 10 tours par minutes et après 8 jours sans agitation inférieure à la viscosité de la suspension selon l'art antérieur, ce qui se traduit en pratique par une meilleure pompabilité de la suspension stockée plusieurs jours dans une cuve non agitée.

EXEMPLE 2 :

Cet exemple concerne l'obtention d'un agent de broyage et/ou de dispersion, selon l'invention par la séparation, à l'aide d'une membrane capillaire, à une température variant de 17°C à 28°C d'un polyacrylate mixte de calcium et de sodium neutralisé totalement par un mélange de soude et de chaux ainsi que son utilisation comme agent de broyage et/ou de dispersion.

Essai n°8 :

Dans ce but une solution aqueuse à 32 % de concentration en polyacrylate totalement neutralisé par un mélange composé à 76 % de soude et 24 % de chaux, de poids moléculaire moyen en poids $\overline{Mw}$ = 6000 déterminé par GPC aqueuse, a été diluée à 10 % avec de l'eau purifiée par osmose inverse puis séparé avec le même matériel que celui de l'essai n°1 et dans les conditions décrites ci-après.

Pour les mesures de GPC, on utilise les mêmes standards que ceux de l'exemple 1.

Après 2 heures de fonctionnement du dispositif à un débit d'alimentation de 1000 l/h avec une température s'élevant progressivement de 17°C à 28°C et une pression évoluant à l'entrée de $2,8.10^5$ Pa à $2,6,10^5$ Pa en passant par un maximum de $3\ 10^5$ Pa et à la sortie de $1,0,10^5$ Pa à $1,2,10^5$ Pa, le rétentat recueilli correspondant à l'agent de broyage et/ou de dispersion, selon l'invention, est un polyacrylate mixte de sodium et de calcium totalement neutralisé ayant une teneur en matière sèche de 10,6 %, un poids moléculaire moyen en poids $\overline{Mw}$ = 6200 déterminé par GPC aqueuse et se caractérise par une courbe de distribution de poids moléculaire obtenue par analyse GPC aqueuse et détection réfractométrique présentant une atténuation de 3,8 %, par rapport au produit de départ, du deuxième pic d'inflexion correspondant à un épaulement alors que le perméat est un polyacrylate mixte de sodium et de calcium totalement neutralisé ayant une teneur en matière sèche de 5,1 % et un poids moléculaire moyen en poids $\overline{Mw}$ = 1570 déterminé par GPC aqueuse.

Essais n°9 et 10 :

Ces essais concernent la préparation d'une suspension de carbonate de calcium grossier soumise à un broyage pour l'affiner en une suspension microparticulaire.

Dans ce but, une suspension de carbonate de calcium grossier a été préparée à partir d'un carbonate de calcium, en mettant en oeuvre :

- pour l'essai n°9 illustrant l'art antérieur, un polyacrylate mixte de sodium et de calcium totalement neutralisé de $\overline{Mw}$ = 6000 déterminé par GPC aqueuse et résultant de la polymérisation radicalaire de l'acide acrylique et correspondant au produit d'alimentation du dispositif de séparation
- pour l'essai n°10 illustrant l'invention le polyacrylate de sodium et de calcium totalement neutralisé de l'essai n°8 et de $\overline{Mw}$ = 6200.

Pour chaque essai la préparation de la suspension aqueuse de carbonate de calcium et son broyage ont été effectués dans les mêmes conditions opératoires et avec le même matériel que pour les essais n°4 à 7.

Les résultats expérimentaux sont consignés dans le tableau 2 suivant :

La lecture du tableau 2 permet de constater que le fractionnement à l'aide d'une membrane capillaire d'un polya-

- TABLEAU 2 -

| | Essai n° | AGENT DE BROYAGE UTILISE | | | | | Viscosité Brookfield de la suspension (à 20°C en m.Pa.s) à 76 % de matière sèche | | | | | |
|---|---|---|---|---|---|---|---|---|---|---|---|---|
| | | Neutralisation Séparation Taux-ion/Taux-ion (%)        (%) | Mw | Atténuation du 2ème pic d'inflexion (%) | Extrait sec % | Consommation en agent en % sec/sec | To 10 T/min | To 100 T/min | 8 jours AVAG 10 T/min | 8 jours AVAG 100 T/min | 8 jours APAG 10 T/min | 8 jours APAG 100 T/min |
| Art antérieur | 9 | 76 Na/24 Ca | 6000 | 0 | 32 | 1,05 | 1300 | 430 | 5710 | 1100 | 1100 | 360 |
| Invention | 10 | 76 Na/24 Ca | 6200 | 3,8 | 10,6 | 1,05 | 1300 | 420 | 3730 | 980 | 1100 | 360 |

AVAG : Mesure de la viscosité avant agitation de la suspension

APAG : Mesure de la viscosité après agitation de la suspension

crylate totalement neutralisé par un mélange de soude et de chaux permet d'obtenir un agent de broyage et/ou de dispersion selon l'invention dont la courbe de distribution de poids moléculaire obtenue par analyse GPC aqueuse et détection réfractométrique présente une atténuation du deuxième pic d'inflexion, correspondant à un épaulement, d'au moins 3,8 % par rapport au produit de départ.

Cette lecture permet également de constater que l'agent de broyage et/ou de dispersion selon l'invention permet d'aboutir à des suspensions aqueuses de carbonate de calcium hautement concentrées et de viscosité Brookfield, à une vitesse de rotation du mobile adéquat, de l'ordre de 10 tours par minute et après 8 jours sans agitation inférieure à la viscosité de la suspension selon l'art antérieur, ce qui se traduit en pratique par une meilleure pompabilité de la suspension stockée plusieurs jours dans une cuve non agitée.

EXEMPLE 3 :

Cet exemple concerne l'obtention d'un agent de broyage et/ou de dispersion, selon l'invention par la séparation, à l'aide d'une membrane capillaire, à une température variant de 18°C à 28°C d'un polyacrylate de sodium partiellement neutralisé à 50 % par de la soude ainsi que son utilisation comme agent de broyage et/ou de dispersion.

Essai n°11 :

Dans ce but une solution aqueuse à 29 % de concentration en polyacrylate neutralisé partiellement à 50 % par de la soude de poids moléculaire moyen en poids $\overline{Mw}$ = 6000 déterminé par GPC aqueuse a été diluée à 10 % avec de l'eau purifiée par osmose inverse puis séparé avec le même matériel que celui de l'essai n° 1 et dans les conditions décrites ci-après.

Pour les mesures de GPC, on utilise les mêmes standards que ceux de l'exemple 1.

Après 2 heures de fonctionnement du dispositif à un débit d'alimentation de 1000 l/h avec une température s'élevant progressivement de 18°C à 28°C et une pression évoluant à l'entrée de $3,1.10^5$ Pa à $3,0.10^5$ Pa en passant par un maximum de $3,2.10^5$ Pa et à la sortie de $1,0.10^5$ Pa à $1,1.10^5$ Pa, le rétentat recueilli correspondant à l'agent de broyage et/ou de dispersion, selon l'invention, est un polyacrylate de sodium partiellement neutralisé à 50 % ayant une teneur en matière sèche de 10,1 %, un poids moléculaire moyen en poids $\overline{Mw}$ = 6070 déterminé par GPC aqueuse et se caractérise par une courbe de distribution de poids moléculaire obtenue par analyse GPC aqueuse et détection réfractométrique présentant une atténuation de 9,9 %, par rapport au produit de départ, du deuxième pic d'inflexion correspondant à un épaulement alors que le perméat est un polyacrylate de sodium partiellement neutralisé à 50 % ayant une teneur en matière sèche de 6,9 % et un poids moléculaire moyen en poids $\overline{Mw}$ = 2500 déterminé par GPC aqueuse.

Essais n°12 et 13 :

Ces essais concernent la préparation d'une suspension de carbonate de calcium grossier soumise à un broyage pour l'affiner en une suspension microparticulaire.

Dans ce but, une suspension de carbonate de calcium grossier a été préparée à partir d'un carbonate de calcium naturel en mettant en oeuvre :

- pour l'essai n°12 illustrant l'art antérieur, un polyacrylate de sodium partiellement neutralisé à 50 % et de $\overline{Mw}$ = 6000 déterminé par GPC aqueuse et résultant de la polymérisation radicalaire de l'acide acrylique et correspondant au produit d'alimentation du dispositif de séparation de l'essai n° 11 mais neutralisé pour le dit essai à 100 % avec de la soude.
- pour l'essai n°13 illustrant l'invention le polyacrylate de sodium partiellement neutralisé à 50 % de l'essai n°11 et de $\overline{Mw}$ = 6070, neutralisé lui aussi pour le dit essai,à 100 % avec de la soude après la séparation.

Pour chaque essai la préparation de la suspension aqueuse de carbonate de calcium et son broyage ont été effectués dans les mêmes conditions opératoires et avec le même matériel que pour les essais n°4 à 7.

Les résultats expérimentaux sont consignés dans le tableau 3 suivant :

La lecture du tableau 3 permet de constater que le fractionnement à l'aide d'une membrane capillaire d'un polya-

– TABLEAU 3 –

| | Essai No. | AGENT DE BROYAGE UTILISE | | | | | Viscosité Brookfield de la suspension (à 20°C en m.Pa.s) à 76 % de matière sèche | | | | | |
|---|---|---|---|---|---|---|---|---|---|---|---|---|
| | | Neutralisation pour séparation Taux-Ion (en %) | Mw | Atténuation du 2ème pic d'inflexion (%) | Extrait sec % | Consommation en agent en % sec/sec | To 10 T/min | To 100 T/min | 8 jours AVAG 10 T/min | 8 jours AVAG 100 T/min | 8 jours APAG 10 T/min | 8 jours APAG 100 T/min |
| Art antérieur | 12 | 50 Na | 6000 | 0 | 29 | 0,97 | 1760 | 660 | 25720 | 2370 | 10770 | 2600 |
| Invention | 13 | 50 Na | 6070 | 9,9 | 10,1 | 0,87 | 930 | 350 | 12930 | 2370 | 2070 | 670 |

AVAG : Mesure de la viscosité avant agitation de la suspension

APAG : Mesure de la viscosité après agitation de la suspension

EP 0 717 051 A1

crylate partiellement neutralisé à 50 % par de la soude permet d'obtenir un agent de broyage et/ou de dispersion selon l'invention dont la courbe de distribution de poids moléculaire obtenue par analyse GPC aqueuse et détection réfractométrique présente une atténuation du deuxième pic d'inflexion, correspondant à un épaulement, d'au moins 9,9 % par rapport au produit de départ.

Cette lecture permet également de constater que l'agent de broyage et/ou de dispersion selon l'invention permet d'aboutir à des suspensions aqueuses de carbonate de calcium hautement concentrées et plus stables que celles de l'art antérieur.

EXEMPLE 4 :

Cet exemple concerne l'obtention d'un agent de broyage et/ou de dispersion, selon l'invention par la séparation à l'aide d'une membrane capillaire à une température variant de 19°C à 31°C d'un polyacrylate de sodium partiellement neutralisé à 5 % par de la soude ainsi que son utilisation comme agent de broyage et/ou de dispersion.

Essai n°14 :

Dans ce but une solution aqueuse à 26,3 % de concentration en polyacrylate neutralisé partiellement à 5 % par de la soude, de poids moléculaire moyen en poids $\overline{Mw}$ = 6000 déterminé par GPC aqueuse a été diluée à 10 % avec de l'eau purifiée par osmose inverse puis séparé avec le même matériel que celui de l'essai n° 1 et dans les conditions décrites ci-après.

Pour les mesures de GPC, on utilise les mêmes standards que ceux de l'exemple 1.

Après 2,5 heures de fonctionnement du dispositif à un débit d'alimentation de 975 l/h avec une température s'élevant progressivement de 19,3°C à 30,8°C et une pression évoluant à l'entrée de $3,8.10^5$ Pa à $4,0.10^5$ Pa et à la sortie de $0,8.10^5$ Pa à $1,1.10^5$ Pa, le rétentat recueilli correspondant à l'agent de broyage et/ou de dispersion, selon l'invention, est un polyacrylate de sodium partiellement neutralisé à 5 % ayant une teneur en matière sèche de 10,9 %, un poids moléculaire moyen en poids $\overline{Mw}$ = 6050 déterminé par GPC aqueuse et se caractérise par une courbe de distribution de poids moléculaire obtenue par analyse GPC aqueuse et détection réfractométrique présentant une atténuation de 3,5 %, par rapport au produit de départ, du deuxième pic d'inflexion correspondant à un épaulement alors que le perméat est un polyacrylate de sodium partiellement neutralisé à 5 % ayant une teneur en matière sèche de 5,0 % et un poids moléculaire moyen en poids $\overline{Mw}$ = 2130 déterminé par GPC aqueuse.

Essai n°15 :

Cet essai concerne la préparation d'une suspension de carbonate de calcium grossier soumise à un broyage pour l'affiner en une suspension microparticulaire.

Dans ce but, pour l'essai n° 15 illustrant l'invention, une suspension de carbonate de calcium grossier a été préparée à partir d'un carbonate de calcium naturel en mettant en oeuvre le polyacrylate de sodium partiellement neutralisé à 5 % de l'essai n°14 et de $\overline{Mw}$ = 6050 mais neutralisé pour le dit essai à 100 % avec de la soude après séparation.

Pour cet essai la préparation de la suspension aqueuse de carbonate de calcium et son broyage ont été effectués dans les mêmes conditions opératoires et avec le même matériel que pour les essais n°4 à 7.

Les résultats expérimentaux sont consignés dans le tableau 4 suivant :

EP 0 717 051 A1

La lecture du tableau 4 permet de constater que le fractionnement à l'aide d'une membrane capillaire d'un polya-

- TABLEAU 4 -

| | Essai No. | AGENT DE BROYAGE UTILISE | | | | | Viscosité Brookfield de la suspension (à 20°C en m.Pa.s) à 76 % de matière sèche | | | | | |
|---|---|---|---|---|---|---|---|---|---|---|---|---|
| | | Neutralisation Séparation Taux ion (en %) | Mw | Atténuation du 2ème pic d'inflexion (%) | Extrait sec % | Consommation en agent en % sec/sec | To 10 T/min | To 100 T/min | 8 jours AVAG 10 T/min | 8 jours AVAG 100 T/min | 8 jours APAG 10 T/min | 8 jours APAG 100 T/min |
| Invention | 15 | 5 Na | 6050 | 3,5 | 10,9 | 0,93 | 1300 | 470 | 21850 | 3590 | 5630 | 1650 |

AVAG : Mesure de la viscosité avant agitation de la suspension

APAG : Mesure de la viscosité après agitation de la suspension

crylate partiellement neutralisé à 5 % par de la soude permet d'obtenir un agent de broyage et/ou de dispersion selon l'invention dont la courbe de distribution de poids moléculaire obtenue par analyse GPC aqueuse et détection réfractométrique présente une atténuation du deuxième pic d'inflexion, correspondant à un épaulement, d'au moins 3,5 % par rapport au produit de départ.

Cette lecture permet également de constater que l'agent de broyage et/ou de dispersion selon l'invention permet d'aboutir à des suspensions aqueuses de carbonate de calcium hautement concentrées alors qu'aucun procédé de séparation de l'art antérieur ne permet de séparer et d'obtenir à ce taux de neutralisation (5 %) un agent de broyage et/ou de dispersion.

EXEMPLE 5 :

Cet exemple concerne l'obtention d'un agent de broyage et/ou de dispersion, selon l'invention par la séparation à l'aide d'une membrane capillaire à une température variant de 20,2 à 32,8°C d'un acide polyacrylique ainsi que son utilisation comme agent de broyage et/ou de dispersion.

Essai n°16 :

Dans ce but une solution aqueuse à 24,7 % de concentration en acide polyacrylique de poids moléculaire moyen en poids $\overline{Mw}$ = 4500 déterminé par GPC aqueuse a été diluée à 15 % avec de l'eau puis séparé avec le même matériel que celui de l'essai n° 1 et dans les conditions décrites ci-après.

Pour les mesures de GPC, on utilise les mêmes standards que ceux de l'exemple 1.

Après 22 heures de fonctionnement du dispositif à un débit d'alimentation de 1200 l/h avec une température variant entre 20,2°C et 32,8°C et une pression évoluant à l'entrée de $1,5.10^5$ Pa à $3,2.10^5$ Pa et à la sortie de $0,5.10^5$ Pa à $1,6.10^5$ Pa, le rétentat recueilli correspondant à l'agent de broyage et/ou de dispersion, selon l'invention, est un acide polyacrylique ayant une teneur en matière sèche de 17,5 %, un poids moléculaire moyen en poids $\overline{Mw}$ = 4600 déterminé par GPC aqueuse et se caractérise par une courbe de distribution de poids moléculaire obtenue par analyse GPC aqueuse et détection réfractométrique présentant une atténuation de 8,2 %, par rapport au produit de départ, du deuxième pic d'inflexion correspondant à un épaulement alors que le perméat est un acide polyacrylique ayant une teneur en matière sèche de 6,0 % et un poids moléculaire moyen en poids $\overline{Mw}$ = 2200 déterminé par GPC aqueuse.

Essais n°17 et 18 :

Ces essais concernent la préparation d'une suspension de carbonate de calcium grossier soumise à un broyage pour l'affiner en une suspension microparticulaire.

Dans ce but, une suspension de carbonate de calcium grossier a été préparée à partir d'un carbonate de calcium naturel en mettant en oeuvre :

- pour l'essai n°17 illustrant l'art antérieur, un acide polyacrylique de $\overline{Mw}$ = 4500 déterminé par GPC aqueuse, résultant de la polymérisation radicalaire de l'acide acrylique et correspondant au produit d'alimentation du dispositif de séparation de l'essai n° 16 mais neutralisé pour le dit essai à 100 % avec de la soude.

- pour l'essai n°18 illustrant l'invention l'acide polyacrylique de l'essai n°16 et de $\overline{Mw}$ = 4600, neutralisé lui aussi pour le dit essai, à 100 % avec de la soude après la séparation.

Pour chaque essai la préparation de la suspension aqueuse de carbonate de calcium et son broyage ont été effectués dans les mêmes conditions opératoires et avec le même matériel que pour les essais n°4 à 7.

Les résultats expérimentaux sont consignés dans le tableau 5 suivant :

- TABLEAU 5 -

| | Essai No. | AGENT DE BROYAGE UTILISE | | | | | Viscosité Brookfield de la suspension (à 20°C en m.Pa.s) à 76 % de matière sèche | | | | | |
|---|---|---|---|---|---|---|---|---|---|---|---|---|
| | | Neutralisation Séparation Taux Ion (en %) | Mw | Atténuation du 2ème pic d'inflexion (%) | Extrait sec % | Consommation en agent en % sec/sec | To 10 T/min | To 100 T/min | 8 jours AVAG 10 T/min | 8 jours AVAG 100 T/min | 8 jours APAG 10 T/min | 8 jours APAG 100 T/min |
| Art antérieur | 17 | 0 | 4500 | 0 | 24,7 % | 1,08 | 1400 | 400 | 2030 | 650 | 1120 | 330 |
| Invention | 18 | 0 | 4600 | 8,2 | 17,5 % | 1,08 | 1400 | 400 | 1900 | 640 | 850 | 280 |

AVAG : Mesure de la viscosité avant agitation de la suspension
APAG : Mesure de la viscosité après agitation de la suspension

La lecture du tableau 5 permet de constater que le fractionnement à l'aide d'une membrane capillaire d'un acide polyacrylique permet d'obtenir un agent de broyage et/ou de dispersion selon l'invention dont la courbe de distribution de poids moléculaire obtenue par analyse GPC aqueuse et détection réfractométrique présente une atténuation du deuxième pic d'inflexion, correspondant à un épaulement, d'au moins 8,2 % par rapport au produit de départ.

Cette lecture permet également de constater que l'agent de broyage et/ou de dispersion selon l'invention permet d'aboutir à des suspensions aqueuses de carbonate de calcium au moins aussi stables qu'un produit non séparé de l'art antérieur alors qu'aucun procédé de séparation de l'art antérieur ne permet de séparer et d'obtenir à l'état totalement acide un agent de broyage et/ou de dispersion.

EXEMPLE 6 :

Cet exemple concerne l'obtention d'un agent de broyage et/ou de dispersion selon l'invention par la séparation à l'aide d'un système de plusieurs membranes de nanofiltration plates ou tubulaires montées en série à une température de l'ordre de 68°C d'un polyacrylate de soude totalement neutralisé par de la soude ainsi que son utilisation comme agent de broyage et/ou de dispersion.

Essai n°19 :

Dans ce but, une solution aqueuse de 24,5 % de concentration en polyacrylate totalement neutralisé par de la soude, de poids moléculaire moyen en poids $\overline{Mw}$ = 5160 déterminé par GPC aqueuse est introduite, au moyen d'une pompe de circulation de type Moineau à un débit de 400 l/h à travers le système de membranes solides sur support carbone et traitées en surface par du polyéthyléneimine quaternisé, l'ensemble des membranes ayant une surface de 11,3.$10^{-3}$ m$^2$.

Pour les mesures de GPC, on utilise les mêmes standards que ceux de l'exemple 1.

Après 7 heures 30 minutes de fonctionnement à une température de 68°C et une pression de 30.$10^5$ Pa, le rétentat recueilli correspondant à l'agent de broyage et/ou de dispersion, selon l'invention, est un polyacrylate de sodium totalement neutralisé ayant une teneur en matière sèche de 22%, un poids moléculaire moyen en poids $\overline{Mw}$ = 5520 déterminé par GPC aqueuse et se caractérise par une courbe de distribution de poids moléculaire obtenue par analyse GPC aqueuse et détection réfractométrique présentant une atténuation de 15,0 %, par rapport au produit de départ, du deuxième pic d'inflexion correspondant à un épaulement alors que le perméat est un polyacrylate de sodium totalement neutralisé ayant une teneur en matière sèche de 6,5 % et un poids moléculaire moyen en poids $\overline{Mw}$ = 2430 déterminé par GPC aqueuse.

Essais n°20 et 21:

Ces essais concernent la préparation d'une suspension de carbonate de calcium grossier soumise à un broyage pour l'affiner en une suspension microparticulaire.

Dans ce but, une suspension de carbonate de calcium grossier a été préparée à partir d'un carbonate de calcium naturel en mettant en oeuvre :

- pour l'essai n°20 illustrant l'art antérieur, un polyacrylate de sodium totalement neutralisé et de poids moléculaire moyen en poids $\overline{Mw}$ = 5160 déterminé par GPC aqueuse et résultant de la polymérisation radicalaire de l'acide acrylique et correspondant au produit d'alimentation du dispositif de séparation
- pour l'essai n°21 illustrant l'invention le polyacrylate de sodium totalement neutralisé de l'essai n°19 et de $\overline{Mw}$ = 5520.

Pour chaque essai la préparation de la suspension aqueuse de carbonate de calcium et son broyage ont été effectués dans les mêmes conditions opératoires et avec le même matériel que pour les essais n°4 à 7.

Les résultats expérimentaux sont consignés dans le tableau 6 suivant :

EP 0 717 051 A1

La lecture du tableau 6 permet de constater que le fractionnement, à l'aide d'un système de membranes sur support

– TABLEAU 6 –

| | Essai No. | AGENT DE BROYAGE UTILISE | | | | | Viscosité Brookfield de la suspension (à 20°C en M.Pa.s) à 76 % de matière sèche | | | | | |
|---|---|---|---|---|---|---|---|---|---|---|---|---|
| | | Neutralisation Séparation Taux-Ion (en %) | Mw | Atténuation du 2ème pic d'inflexion (%) | Extrait sec % | Consommation en agent en % sec/sec | To 10 T/min | To 100 T/min | 8 jours AVAG 10 T/min | 8 jours AVAG 100 T/min | 8 jours APAG 10 T/min | 8 jours APAG 100 T/min |
| Art antérieur | 20 | 100 Na | 5160 | 0 | 24,5 | 0,97 | 1275 | 500 | 40000 | 5000 | 7100 | 2050 |
| Invention | 21 | 100 Na | 5520 | 15,0 | 22 | 0,9 | 1050 | 380 | 3200 | 2620 | 1350 | 500 |

AVAG : Mesure de la viscosité avant agitation de la suspension

APAG : Mesure de la viscosité après agitation de la suspension

carbone et traitées en surface par du polyéthyléneimine totalement neutralisé par de la soude permet d'obtenir un agent de broyage et/ou de dispersion selon l'invention dont la courbe de distribution de poids moléculaire obtenue par analyse GPC aqueuse et détection réfractométrique présente une atténuation du deuxième pic d'inflexion, correspondant à un épaulement, d'au moins 15,0 % par rapport au produit de départ.

Cette lecture permet également de constater que l'agent de broyage et/ou de dispersion selon l'invention permet d'aboutir à des suspensions aqueuses de carbonate de calcium hautement concentrées et beaucoup plus stables que celles obtenues avec l'agent de broyage non séparé de l'art antérieur.

Exemple 7 :

Cet exemple concerne l'obtention d'un agent de broyage et/ou de dispersion selon l'invention par la séparation, à l'aide d'une membrane CARBOSEP type M5 à base de carbone et zircon, à une température de l'ordre de 25°C d'un copolymère totalement neutralisé par de la soude et son utilisation comme agent de broyage et/ou de dispersion.

Essai n° 22 :

Dans ce but une solution aqueuse à 30 % de concentration en matière sèche d'un copolymère totalement neutralisé par de la soude et composé de 97 % en poids par rapport au poids total des monomères d'acide acrylique et 3 % en poids, par rapport au poids total des monomères, d'acide acrylamidométhyl-propane sulfonique (AMPS) et de poids moléculaire moyen en poids $\overline{Mw}$ = 4700 determiné par GPC aqueuse a été diluée à 2 % avec de l'eau purifiée par osmose inverse puis séparée avec un débit d'alimentation de 8 litres par heure et par $m^2$ de membrane, à une température de 25°C et sous une pression de $10^5$ Pa.

Le rétentat alors recueilli correspondant à l'agent de broyage et/ou de dispersion, selon l'invention, est un copolymère d'acide acrylique et d'AMPS totalement neutralisé par de la soude et ayant une teneur en matière sèche de 1,6 %, un poids moléculaire moyen en poids $\overline{Mw}$ = 4950 déterminé par GPC aqueuse, les standards étant ceux de l'exemple 1, et se caractérise par une courbe de distribution de poids moléculaire obtenue par analyse GPC aqueuse et détection réfractométrique présentant une atténuation du deuxième pic d'inflexion de 6,0 %, par rapport au produit de départ, alors que le perméat est un copolymère d'acide acrylique et d'AMPS totalement neutralisé par de la soude et ayant une teneur en matière sèche de 0,6 % et un poids moléculaire moyen en poids $\overline{Mw}$ = 1000 déterminé par GPC aqueuse.

Essais n°23 et 24 :

Ces essais concernent la préparation d'une suspension de carbonate de calcium grossier soumise à un broyage pour l'affiner en une suspension microparticulaire.

Dans ce but, une suspension de carbonate de calcium grossier a été préparée à partir d'un carbonate de calcium naturel en mettant en oeuvre :

- pour l'essai n°23 illustrant l'art antérieur, un copolymère d'acide acrylique et d'AMPS totalement neutralisé par de la soude, de $\overline{Mw}$ = 4700 déterminé par GPC aqueuse, de concentration en matière sèche égale à 30 %, résultant de la copolymérisation radicalaire de l'acide acrylique et de l'AMPS et correspondant au produit d'alimentation du dispositif de séparation.

- pour l'essai n°24 illustrant l'invention, le copolymère totalement neutralisé par la soude de l'essai n°22 et de Mw = 4950.

Pour chaque essai, la préparation de la suspension aqueuse de carbonate de calcium et son broyage ont été effectués dans les mêmes conditions opératoires et avec le même matériel que pour les essais n°4 à 7.

Les résultats expérimentaux sont consignés dans le tableau 7 suivant :

– TABLEAU 7 –

| | Essai No. | AGENT DE BROYAGE UTILISE | | | | | Viscosité Brookfield de la suspension (à 20°C en M.Pa.s) à 76 % de matière sèche | | | | | |
| | | Neutralisation Taux-Ion (en %) | Mw | Atténuation du 2ème pic d'inflexion (%) | Extrait sec % | Consommation en agent en % sec/sec | To 10 T/min | To 100 T/min | 8 jours AVAG 10 T/min | 8 jours AVAG 100 T/min | 8 jours APAG 10 T/min | 8 jours APAG 100 T/min |
|---|---|---|---|---|---|---|---|---|---|---|---|---|
| Art antérieur | 23 | 100 Na | 4700 | 0 | 30 | 0,98 | 3720 | 980 | 47000 | 6460 | 19580 | 4700 |
| Invention | 24 | 100 Na | 4950 | 6,0 | 1,6 | 0,93 | 1200 | 350 | 15000 | 2200 | 9800 | 2350 |

AVAG : Mesure de la viscosité avant agitation de la suspension

APAG : Mesure de la viscosité après agitation de la suspension

La lecture du tableau 7 permet de constater que le fractionnement à l'aide d'une membrane CARBOSEP type M5 d'un copolymère d'acide acrylique et d'AMPS totalement neutralisé par de la soude permet d'obtenir un agent de broyage et/ou de dispersion selon l'invention dont la courbe de distribution de poids moléculaire obtenue par analyse GPC aqueuse et détection réfractométrique présente une atténuation du deuxième pic d'inflexion, correspondant à un épaulement, d'au moins 6 % par rapport au produit de départ.

Cette lecture permet également de constater que l'agent de broyage et/ou de dispersion selon l'invention permet d'aboutir à des suspensions aqueuses de carbonate de calcium hautement concentrées et plus stables que celles de l'art antérieur.

EXEMPLE 8 :

Cet exemple concerne l'obtention d'un agent de broyage et/ou de dispersion, selon l'invention par la séparation, à l'aide de la même membrane que celle de l'exemple 7, à une température de l'ordre de 25°C, d'un polymère totalement neutralisé par un mélange de soude et d'hydroxyde de magnésium et son utilisation comme agent de broyage et/ou de dispersion.

Essai n° 25 :

Dans ce but une solution aqueuse à 31 % de concentration en matière sèche d'un polyacrylate totalement neutralisé par un mélange composé à 60 % de soude et à 40 % d'hydroxyde de magnésium, de poids moléculaire moyen en poids $\overline{Mw}$ = 5160 déterminé par GPC aqueuse a été diluée à 2 % avec de l'eau purifiée par osmose inverse puis séparée avec le même matériel et les mêmes conditions que celui de l'essai n°22.

Le rétentat alors recueilli correspondant à l'agent de broyage et/ou de dispersion, selon l'invention, est un polyacrylate totalement neutralisé par un mélange de soude et d'hydroxyde de magnésium ayant une teneur en matière sèche de 1,6 %, un poids moléculaire moyen en poids $\overline{Mw}$ = 5400 déterminé par GPC aqueuse et se caractérise par une courbe de distribution de poids moléculaire obtenue par analyse GPC aqueuse et détection réfractométrique présentant une atténuation du deuxième pic d'inflexion de 6,0 %, par rapport au produit de départ, alors que le perméat est un polyacrylate totalement neutralisé par un mélange de soude et d'hydroxyde de magnésium ayant une teneur en matière sèche de 0,6 % et un poids moléculaire moyen en poids $\overline{Mw}$ = 2000 déterminé par GPC aqueuse.

Essais n°26 et 27 :

Ces essais concernent la préparation d'une suspension de carbonate de calcium grossier soumise à un broyage pour l'affiner en une suspension microparticulaire.

Dans ce but, une suspension de carbonate de calcium grossier a été préparée à partir d'un carbonate de calcium naturel en mettant en oeuvre :

- pour l'essai n°26 illustrant l'art antérieur, un polyacrylate totalement neutralisé par un mélange composé à 60 % de soude et à 40 % d'hydroxyde de magnésium, de $\overline{Mw}$ = 5160 déterminé par GPC aqueuse, de concentration en matière sèche égale à 31,0 % et résultant de la polymérisation radicalaire de l'acide acrylique et correspondant au produit d'alimentation du dispositif de séparation

- pour l'essai n°27 illustrant l'invention, le polyacrylate de l'essai n°25 et de $\overline{Mw}$ = 5400.

Pour chaque essai, la préparation de la suspension aqueuse de carbonate de calcium et son broyage ont été effectués dans les mêmes conditions opératoires et avec le même matériel que pour les essais n°4 à 7.

Les résultats expérimentaux sont consignés dans le tableau 8 suivant :

La lecture du tableau 8 permet de constater que le fractionnement à l'aide d'une membrane CARBOSEP type M5

− TABLEAU 8 −

| | Essai No. | AGENT DE BROYAGE UTILISE | | | | | Viscosité Brookfield de la suspension (à 20°C en M.Pa.s) à 76 % de matière sèche | | | | | |
| --- | --- | --- | --- | --- | --- | --- | --- | --- | --- | --- | --- | --- |
| | | Neutralisation Séparation Taux-Ion (en %) | Mw | Atténuation du 2ème pic d'inflexion (%) | Extrait sec % | Consommation en agent en % sec/sec | To 10 T/min | To 100 T/min | 8 jours AVAG 10 T/min | 8 jours AVAG 100 T/min | 8 jours APAG 10 T/min | 8 jours APAG 100 T/min |
| Art antérieur | 26 | 60 Na/40 Mg | 5160 | 0 | 31,0 | 1,15 | 1500 | 480 | 3400 | 880 | 1300 | 380 |
| Invention | 27 | 60 Na/40 Mg | 5400 | 6,0 | 1,6 | 1,11 | 1350 | 400 | 2000 | 580 | 1030 | 290 |

AVAG : Mesure de la viscosité avant agitation de la suspension

APAG : Mesure de la viscosité après agitation de la suspension

d'un polymère d'acide acrylique totalement neutralisé par un mélange composé de soude et d'hydroxyde de magnésium permet d'obtenir un agent de broyage et/ou de dispersion selon l'invention dont la courbe de distribution de poids moléculaire obtenue par analyse GPC aqueuse et détection réfractométrique présente une atténuation du deuxième pic d'inflexion, correspondant à un épaulement, d'au moins 6,0 % par rapport au produit de départ.

Cette lecture permet également de constater que l'agent de broyage et/ou de dispersion selon l'invention permet d'aboutir à des suspensions aqueuses de carbonate de calcium hautement concentrées et plus stables que celles de l'art antérieur.

EXEMPLE 9 :

Cet exemple concerne l'obtention d'un agent de broyage et/ou de dispersion, selon l'invention par la séparation à l'aide d'une membrane capillaire à une température variant de 20°C à 33°C d'un copolymère d'acide acrylique et de méthacrylamide partiellement neutralisé à 50 % par de la soude ainsi que son utilisation comme agent de broyage et/ou de dispersion.

Essai n°28 :

Dans ce but une solution aqueuse à 29,4 % de concentration en matière sèche d'un copolymère d'acide acrylique et de méthacrylamide neutralisé partiellement à 50 % par de la soude, de poids moléculaire moyen en poids $\overline{Mw} =$ 5350 déterminé par GPC aqueuse a été diluée à 10 % avec de l'eau purifiée par osmose inverse puis séparée avec le même matériel que celui de l'essai n° 1 et dans les conditions décrites ci-après.

Pour les mesures de GPC, on utilise les mêmes standards que ceux de l'exemple 1.

Après 7 heures de fonctionnement du dispositif à un débit d'alimentation variant de 700 à 1200 l/h avec une température s'élevant progressivement de 20,6°C à 33,5°C et une pression à l'entrée de l'ordre de $2,5.10^5$ Pa et à la sortie de l'ordre de $1,3.10^5$ Pa, le rétentat recueilli correspondant à l'agent de broyage et/ou de dispersion, selon l'invention, est un copolymère acide acrylique - méthacrylamide partiellement neutralisé à 50 % par de la soude ayant une teneur en matière sèche de 10,0 %, un poids moléculaire moyen en poids $\overline{Mw} = 6100$ déterminé par GPC aqueuse et se caractérise par une courbe de distribution de poids moléculaire obtenue par analyse GPC aqueuse et détection réfractométrique présentant une atténuation de 6,8 %, par rapport au produit de départ, du deuxième pic d'inflexion correspondant à un épaulement alors que le perméat est un copolymère partiellement neutralisé à 50 % ayant une teneur en matière sèche de 7,6 % et un poids moléculaire moyen en poids $\overline{Mw} = 2900$ déterminé par GPC aqueuse.

Essai n°29 et n° 30 :

Ces essais concernent la préparation d'une suspension de carbonate de calcium grossier soumise à un broyage pour l'affiner en une suspension microparticulaire. Dans ce but, une suspension de carbonate de calcium grossier a été préparée à partir d'un carbonate de calcium naturel en mettant en oeuvre :

- pour l'essai n°29 illustrant l'art antérieur, un copolymère acide acrylique-méthacrylamide de poids moléculaire moyen en poids $\overline{Mw} = 5350$ déterminé par GPC aqueuse, et correspondant au produit d'alimentation du dispositif de séparation de l'essai n° 28 mais neutralisé à 100 % avec de la soude pour le dit essai
- pour l'essai n°30 illustrant l'invention le copolymère acide acrylique méthacrylamide partiellement neutralisé à 50 % de l'essai n°28 et de $\overline{Mw} = 6100$ mais neutralisé lui aussi pour le dit essai à 100 % avec de la soude après séparation.

Pour chaque essai la préparation de la suspension aqueuse de carbonate de calcium et son broyage ont été effectués dans les mêmes conditions opératoires et avec le même matériel que pour les essais n°4 à 7.

Les résultats expérimentaux sont rassemblés dans le tableau 9 suivant :

– TABLEAU 9 –

| | Essai No. | AGENT DE BROYAGE UTILISE | | | | | Viscosité Brookfield de la suspension (à 20°C en M.Pa.s) à 76 % de matière sèche | | | | | |
| --- | --- | --- | --- | --- | --- | --- | --- | --- | --- | --- | --- | --- |
| | | Neutralisation Séparation Taux-Ion (en %) | Mw | Atténuation du 2ème pic d'inflexion (%) | Extrait sec % | Consommation en agent en % sec/sec | To 10 T/min | To 100 T/min | AVAG 10 T/min 8 jours | AVAG 100 T/min 8 jours | APAG 10 T/min 8 jours | APAG 100 T/min 8 jours |
| Art antérieur | 29 | 50 Na | 5350 | - | 29,4 | 0,99 | 2090 | 800 | 17500 | 3200 | 3480 | 1350 |
| Invention | 30 | 50 Na | 6100 | 6,8 | 10,0 | 0,95 | 1450 | 540 | 11250 | 2600 | 2000 | 760 |

AVAG : Mesure de la viscosité avant agitation de la suspension

APAG : Mesure de la viscosité après agitation de la suspension

La lecture du tableau 9 permet de constater que le fractionnement à l'aide d'une membrane capillaire d'un copolymère acide acrylique-méthacrylamide partiellement neutralisé à 50 % par de la soude permet d'obtenir un agent de broyage et/ou de dispersion selon l'invention dont la courbe de distribution de poids moléculaire obtenue par analyse GPC aqueuse et détection réfractométrique présente une atténuation du deuxième pic d'inflexion, correspondant à un épaulement, d'au moins 6,8 % par rapport au produit de départ.

Cette lecture permet également de constater que l'agent de broyage et/ou de dispersion selon l'invention permet d'aboutir à des suspensions aqueuses de carbonate de calcium hautement concentrées et plus stables que celles obtenues avec l'agent de broyage non séparé de l'art antérieur.

EXEMPLE 10 :

Cet exemple concerne l'obtention d'un agent de dispersion, selon l'invention par la séparation à l'aide d'une membrane capillaire à une température variant de 26°C à 39°C d'un copolymère d'acide acrylique et d'anhydride maléïque totalement neutralisé par de la soude ainsi que son utilisation comme agent de dispersion.

Essai n°31 :

Dans ce but une solution aqueuse à 35,3 % de concentration en matière sèche d'un copolymère acide acrylique-anhydride maléïque totalement neutralisé par de la soude, de poids moléculaire moyen en poids $\overline{Mw}$ = 19800 déterminé par GPC aqueuse a été diluée à 10 % avec de l'eau purifiée par osmose inverse puis séparé avec le même matériel que celui de l'essai n° 1 et dans les conditions décrites ci-après.

Pour les mesures de GPC, on utilise les mêmes standards que ceux de l'exemple 1.

Après 7 heures de fonctionnement du dispositif à un débit d'alimentation variant de 700 à 1200 l/h avec une température s'élevant progressivement de 26,6°C à 39,2°C et une pression à l'entrée de l'ordre de $3,4.10^5$ Pa à $3,7.10^5$ Pa et à la sortie de $1,0.10^5$ Pa à $1,1.10^5$ Pa, le rétentat recueilli correspondant à l'agent de dispersion, selon l'invention, est un copolymère acide acrylique-anhydride maléïque totalement neutralisé par de la soude ayant une teneur en matière sèche de 11,7 %, un poids moléculaire moyen en poids $\overline{Mw}$ = 21900 déterminé par GPC aqueuse et se caractérise par une courbe de distribution de poids moléculaire obtenue par analyse GPC aqueuse et détection réfractométrique présentant une atténuation de 3,4 %, par rapport au produit de départ, du deuxième pic d'inflexion correspondant à un épaulement alors que le perméat est un copolymère acide acrylique-anhydride maléïque totalement neutralisé par de la soude ayant une teneur en matière sèche de 4,0 % et un poids moléculaire moyen en poids $\overline{Mw}$ = 3900 déterminé par GPC aqueuse.

Essais n°32 et 33 :

Ces essais concernent la préparation d'une suspension de carbonate de calcium par dispersion dudit carbonate dans l'eau par mise en oeuvre pour l'essai n° 32, du copolymère acide acrylique-anhydride maléïque neutralisé totalement par de la soude et de $\overline{Mw}$ = 19800 correspondant au produit d'alimentation du dispositif de séparation de l'essai n° 31 pour illustrer l'art antérieur et par mise en oeuvre pour l'essai n° 33, illustrant l'invention, du copolymère totalement neutralisé de l'essai n° 31 et de $\overline{Mw}$ = 21900.

Dans ce but pour l'essai n° 32 illustrant l'art antérieur, on a introduit sous agitation dans un récipient d'une capacité de 1,5 litres et muni d'un disque d'agitation de 50 mm de diamètre, 322 grammes d'eau et 17,0 grammes du copolymère acide acrylique-anhydride maléïque totalement neutralisé par la soude et de concentration en matière sèche de 35,3 %. On a ensuite lentement ajouté et sous une agitation de l'ordre de 1000 tours/minute, 1000 grammes de marbre norvégien de granulométrie déterminée par un Sédigraph 5100 de la société Micromeritics et équivalente à 75 % des particules ont une dimension inférieure à 1 micromètre.

L'introduction terminée, l'agitation est portée à 8000 tours/minute pendant 10 minutes. Au bout de ces 10 minutes, la viscosité de la suspension est mesurée à l'aide d'un viscosimètre Brookfield type RVT à une température de 20°C et une vitesse de rotation du mobile n° 3 de 100 tours/minute.

Après un temps de repos de 7 jours de la suspension, la viscosité de la suspension est mesurée par introduction dans le récipient non agité du mobile n° 3 du viscosimètre Brookfield type RVT à une température de 20°C et une vitesse de rotation de 100 tours/minute (viscosité AVAG = avant agitation). La même mesure de viscosité est effectuée une fois le récipient agité et constitue le résultat de la viscosité APAG (après agitation).

Pour l'essai n° 33 illustrant l'invention, on a préparé, avec le même matériel et dans les mêmes conditions que pour l'essai précédent, une suspension de marbre norvégien par la mise en oeuvre de 288 grammes d'eau, de 51,3 grammes du copolymère acide acrylique-anhydride maléïque de l'essai n° 31 de $\overline{Mw}$ = 21900 et de concentration en matière sèche de 11,7 % et enfin de 1000 grammes du même marbre norvégien que celui de l'essai précédent. Les mesures de viscosité ont été effectuées avec le même mode opératoire et le même matériel que ceux de l'essai précédent.

EP 0 717 051 A1

Les résultats de ces mesures sont rassemblés dans le tableau 10 suivant :

– TABLEAU 10

| | Essai No. | AGENT DE DISPERSION | | | | | Viscosité Brookfield de la suspension (à 20°C en m.Pa.s) à 75 % de matière sèche | | |
|---|---|---|---|---|---|---|---|---|---|
| | | Neutralisation Séparation Taux Ion (en %) | Mw | Atténuation du 2ème pic d'inflexion (%) | Extrait sec % | Consommation en agent en % sec/sec | To 100 T/min | 8 jours AVAG 100 T/min | 8 jours APAG 100 T/min |
| Art antérieur | 32 | 100 Na | 19800 | - | 35,3 | 0,6 | 300 | 1750 | 270 |
| Invention | 33 | 100 Na | 21900 | 3,4 | 11,7 | 0,6 | 235 | 850 | 260 |

AVAG : Mesure de la viscosité avant agitation de la suspension

APAG : Mesure de la viscosité après agitation de la suspension

La lecture du tableau 10 permet de constater que le fractionnement à l'aide d'une membrane capillaire d'un copolymère acide acrylique-anhydride maléïque totalement neutralisé par de la soude permet d'obtenir un agent de dispersion selon l'invention dont la courbe de distribution de poids moléculaire obtenue par analyse GPC aqueuse et détection réfractométrique présente une atténuation du deuxième pic d'inflexion, correspondant à un épaulement, d'au moins 3,4 % par rapport au produit de départ.

Cette lecture permet également de constater que l'agent de dispersion selon l'invention permet d'aboutir à des suspensions aqueuses de carbonate de calcium hautement concentrées et plus stables que celles de l'art antérieur.

## Revendications

1. Procédé d'obtention d'un agent de broyage et/ou de dispersion par séparation physico-chimique en continu et/ou discontinu de polymères et/ou copolymères vinyliques, acryliques et/ou polycondensats hydrosolubles caractérisé en ce qu'il est fait usage d'un dispositif de séparation composé d'une ou plusieurs membranes organiques et/ou minérales surmontant éventuellement un support pour séparer le polymère et/ou copolymère et/ou polycondensat hydrosoluble, en diverses phases utiles dont au moins l'une correspond à l'agent de broyage et/ou de dispersion.

2. Procédé d'obtention d'un agent de broyage et/ou de dispersion par séparation physico-chimique selon la revendication 1 caractérisé en ce que les groupes générateurs de fonction acide du ou des polymères et/ou copolymères vinyliques, acryliques et/ou polycondensats destinés à être séparés sont totalement acides ou partiellement neutralisés ou totalement neutralisés.

3. Procédé d'obtention d'un agent de broyage et/ou de dispersion par séparation physico-chimique selon les revendications 1 ou 2, caractérisé en ce que les groupes générateurs de fonction acide du ou des polymères et/ou copolymères vinyliques, acryliques et/ou polycondensats destinés à être séparés sont totalement acides.

4. Procédé d'obtention d'un agent de broyage et/ou de dispersion par séparation physico-chimique selon les revendications 1 ou 2, caractérisé en ce que les groupes générateurs de fonction acide du ou des polymères et/ou copolymères vinyliques, acryliques et/ou polycondensats destinés à être séparés sont partiellement ou totalement neutralisés.

5. Procédé d'obtention d'un agent de broyage et/ou de dispersion par séparation physico-chimique selon la revendication 4, caractérisé en ce que le ou les agents de neutralisation sont monovalents et/ou polyvalents.

6. Procédé d'obtention d'un agent de broyage et/ou de dispersion par séparation physico-chimique selon la revendication 5, caractérisé en ce que le ou les agents de neutralisation monovalents sont choisis parmi ceux possédant l'ion sodium, l'ion potassium, l'ion lithium, l'ion ammonium ou bien encore une amine primaire, secondaire, tertiaire aliphatique et/ou cyclique.

7. Procédé d'obtention d'un agent de broyage et/ou de dispersion par séparation physico-chimique selon la revendication 5, caractérisé en ce que le ou les agents de neutralisation polyvalents sont choisis parmi ceux possédant l'ion calcium, l'ion magnésium, l'ion zinc, l'ion aluminium.

8. Procédé d'obtention d'un agent de broyage et/ou de dispersion par séparation physico-chimique selon l'une quelconque des revendications 1 à 7, caractérisé en ce que la séparation en diverses phases utiles dont au moins l'une correspond à l'agent de broyage et/ou de dispersion s'effectue jusqu'à des températures de l'ordre de 70°C et pouvant atteindre 150°C.

9. Procédé d'obtention d'un agent de broyage et/ou de dispersion par séparation physico-chimique selon l'une des revendications 1 à 7, caractérisé en ce que la séparation en diverses phases utiles dont au moins l'une correspond à l'agent de broyage et/ou de dispersion s'effectue pour des concentrations en matière sèche variant de 1,5 % à 50 %.

10. Procédé d'obtention d'un agent de broyage et/ou de dispersion par séparation physico-chimique selon l'une des revendications 1 à 7, caractérisé en ce que la séparation en diverses phases utiles dont au moins l'une correspond à l'agent de broyage et/ou de dispersion s'effectue en milieu aqueux.

11. Procédé d'obtention d'un agent de broyage et/ou de dispersion par séparation physico-chimique selon l'une des revendications 1 à 7, caractérisé en ce que la séparation en diverses phases utiles dont au moins l'une correspond à l'agent de broyage et/ou de dispersion s'effectue en milieu hydro-alcoolique ou solvant.

12. Agent de broyage et/ou de dispersion obtenu par le procédé de séparation physico-chimique selon l'une quelconque des revendications 1 à 11, caractérisé en ce que la courbe de distribution de poids moléculaire obtenue par analyse GPC aqueuse et détection réfractométrique présente une atténuation par rapport au produit de départ à séparer, d'au moins 3 % du deuxième pic d'inflexion correspondant à un épaulement.

13. Agent de broyage et/ou de dispersion selon la revendication 12, caractérisé en ce que l'atténuation du deuxième pic d'inflexion correspondant à un épaulement par rapport au produit de départ à séparer est d'au moins environ 10 %.

14. Agent de broyage et/ou de dispersion selon l'une des revendications 12 à 13, caractérisé en ce que les groupes générateurs de fonction acide du dit agent sont partiellement ou totalement neutralisés par un ou plusieurs agents de neutralisation monovalents ou polyvalents.

15. Agent de broyage et/ou de dispersion selon la revendication 14, caractérisé en ce que les agents de neutralisation monovalents sont choisis parmi ceux possédant l'ion sodium, l'ion potassium, l'ion lithium, l'ion ammonium ou bien encore une amine primaire, secondaire, tertiaire aliphatique et/ou cyclique.

16. Agent de broyage et/ou de dispersion selon la revendication 14, caractérisé en ce que les agents de neutralisation polyvalents sont choisis parmi ceux possédant l'ion calcium, l'ion magnésium, l'ion zinc, l'ion aluminium.

17. Agent de broyage et/ou de dispersion selon l'une des revendications 12 à 16 caractérisé en ce qu'il est sous forme d'une solution.

18. Agent de broyage et/ou de dispersion selon l'une des revendications 12 à 16 caractérisé en ce qu'il est sous forme de poudre.

19. Utilisation de l'agent de broyage et/ou de dispersion selon l'une quelconque des revendications 12 à 18 à la fabrication de suspensions aqueuses de particules minérales destinée à des applications pigmentaires.

20. Suspension aqueuse minérale caractérisée en ce qu'elle contient 0,05 % à 2 % d'un ou plusieurs agents de broyage et/ou de dispersion selon l'une quelconque des revendications 12 à 18.

21. Application des suspensions selon la revendication 20 aux domaines pigmentaires et plus particulièrement aux domaines du papier, de la peinture, du plastique, du forage, des travaux publics, de la céramique.

**Office européen des brevets**

# RAPPORT DE RECHERCHE EUROPEENNE

Numero de la demande

EP 95 42 0352

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | DATABASE WPI<br>Derwent Publications Ltd., London, GB;<br>AN 87-168150[24]<br>& JP-A-62 101 693 (KAO CORP.) 12 Mai 1987<br>* abrégé * | 1 | C08F6/04<br>C09C3/04 |
| A | DATABASE WPI<br>Derwent Publications Ltd., London, GB;<br>AN 81-84682D[6]<br>& JP-A-50 131 879 (KURARAY KK) 18 Octobre 1975<br>* abrégé * | 1 | |
| A | DATABASE WPI<br>Derwent Publications Ltd., London, GB;<br>AN 93-172514[21]<br>& JP-A-5 105 495 (KAO CORP.) 27 Avril 1993<br>* abrégé * | 1 | |
| A | GB-A-1 212 758 (AMICON CORPORATION)<br>* revendications 1,6 * | 1 | DOMAINES TECHNIQUES RECHERCHES (Int.Cl.6) |
| A | WO-A-88 05444 (CASCO NOBEL AB)<br>* revendications 1,5 *<br>* page 2, ligne 1 - ligne 4 * | 1 | C08F<br>C08J<br>B01D<br>C09D |
| A | DATABASE WPI<br>Derwent Publications Ltd., London, GB;<br>AN 91-128517[18]<br>& JP-A-3 066 705 (KAO CORP.) 4 Août 1989<br>* abrégé * | 1 | C09C |
| D,A | EP-A-0 127 388 (ALLIED COLLOIDS LIMITED)<br>* revendication 1 *<br>* page 9, ligne 30 - ligne 34 * | 1 | |

Le présent rapport a été établi pour toutes les revendications

| Lieu de la recherche | Date d'achèvement de la recherche | Examinateur |
|---|---|---|
| LA HAYE | 22 Février 1996 | Niaounakis, M |